# EUROPEAN PATENT APPLICATION

(11) **EP 1 239 486 A2**
(43) Date of publication of application: **11.09.2002**
(21) Application number: 02251470.7
(22) Date of filing: 01.03.2002
(51) Int. Cl.: G11B 33/12

(54) **Recording medium reproducing unit and recording medium reproducing unit element**

(30) Priority: 05.03.2001 JP 2001060410
(71) Applicant: Pioneer Corporation, Meguro-ku, Tokyo (JP)
(72) Inventor: Watanabe, Hiroyuki, c/o Pioneer Corporation, Tokorazawa-shi, Saitama (JP); Ito, Hideo, c/o Pioneer Corporation, Tokorazawa-shi, Saitama (JP); Fukushima, Yoshimitsu c/o Pioneer Corporation, Tokorazawa-shi, Saitama (JP); Ohkawara, Masamitsu c/o Pioneer Corporation, Tokorazawa-shi, Saitama (JP); Kurosawa, Masashi c/o Pioneer Corporation, Tokorazawa-shi, Saitama (JP)
(74) Representative: Haley, Stephen

(57) **Abstract**

In a recording medium reproducing unit, hooks are given a holding-down function and a bending function to turn in a plurality directions of flexible cables for connecting a circuit board to major components of a reproducing unit body. An adapter is provided on the under side of the reproducing-unit body to be adapted for various thickness values of disc players. A holding mechanism for a circuit board is provided in the adapter to secure an easy setting of a board within the reproducing unit.

## Description

The present invention relates to a recording medium reproducing unit and an element thereof, and more particularly to a disc reproducing unit provided with a mechanism for reproducing information from an optical disc, such as a CD-ROM or DVD,and an element thereof.

A disc player uses a plurality of cables as a lead wire part for supplying electric power and/or signal transmission to a circuit board. Those cables usually connect movable parts, e.g., a turntable and an optical pickup, to the circuit board. Many other movable parts are included in a disc reproducing unit. There is a danger that the cables are loosened by the weight or length of the cables per se to come in contact with those movable parts, and in an extreme case, a disc reproducing mechanism and a disc transporting mechanism fail to function. To avoid this, fastening hooks for fastening the cables are used as members for arranging the layouts of the cables so that the cables are not loosened.

In many conventional disc players, the circuit board is provided on the under side of the disc reproducing unit. Further, there is no idea of using the chassis of the reproducing unit in common. For this reason, it suffices that the fastening hook is able to function for one direction. Accordingly, the fastening hook generally takes a rectangular shape as viewed from top or bottom and has a clearance for fastening the cables inserted thereinto.

Recently, a large variety of disc players, ranging from the multi-disc player of the thick type to the single disc player of the thin type, are marketed. In the case of the disc player of the thick type, the under side of the reproducing unit has a space (height) large enough to receive the circuit board. When the space of the disc player for receiving the circuit boardis insufficient, there is, to reduce the product thickness, a strong demand to employ such an approach that the circuit board is located on the side of the disc reproducing unit, while it has been located on the under side of the disc reproducing unit.

For such a request that the disc player having the circuit board, which is designed to be located on the side of the reproducing unit, must be reduced in width while keeping its thinness, a possible way to satisfy the request is to locate the circuit board on the back side of the reproducing unit as viewed in the disc transporting direction.

Thus, there are various layouts of the circuit board: the circuit board is located on both sides, the back side and the under side of the reproducing unit. To those layouts, it is necessary to prepare chassises of the reproducing units having the hooks for fastening the cables, which are each designed for each layout, since the directions of the cables to be connected to the circuit board are different for each layout. This results in complexity of the assembling process, and brings about great disadvantages in manufacturing cost.

To locate the circuit board on either or both of the sides of the reproducing unit, one of the possible ways is to provide the hooks so that other cables than the cable derived from the optical pickup are led out from the side of the reproducing unit. The cable derived from the optical pickup is extended only in the backward direction in order to allow the optical pickup to move in the longitudinal direction. For this reason, the necessity of changing the direction of the cable has been present. As seen from Japanese Patent Application No. 2000-94684, filed by the present patent application, in the conventional disc player, a designer copes with the problem by using a tool to determine the bending position in advance, not making efforts to creatively design the shape and layout of the hook. This conventional approach, however, creates other problems, such as increase of the number of parts, and complexity of the working process.

For this reason, it is required to develop the chassis of the disc reproducing unit that may be used commonly for different types of disc players and to reconsider the hook structure as the cable fastening member. Where the conventional rectangular hook is used, it is impossible to appropriately change the direction of the cable in the stage of assembling. Further, the space on the chassis of the recording-medium reproducing unit is insufficient to install many hooks so as to dispose the cables in many directions.

Accordingly, an object of the present invention is to provide a recording medium reproducing unit and an element thereof which are adaptable to various layouts in the disc player by using multi-functional hooks enabling the cables to be disposed in a plurality of directions in a narrow space within the reproducing unit.

Another object of the invention is to provide a recording medium reproducing unit in which the height of the disc player is adjustable in accordance with various layouts of the disc player.

To achieve the above object, there is provided a first aspect of a recording-medium reproducing unit according to the invention which includes at least a recording-medium reproducing device and in which a lead wire part that is connected to a circuit board for supplying electric power and/or signal transmission to the circuit board is led out in either of a first direction or a second direction different from the first direction, the recording-medium reproducing unit comprising: holding members for holding down the lead wire part; and bending members for bending the lead wire part.

Hooks on a reproducing unit are given a holding-down function and a bending function so as to turn in a plurality of directions flexible cables for connecting a circuit board to major components of a reproducing-unit body, such as a turn-able spindle motor, an optical pickup, an optical pickup transporting carriage motor. With such an arrangement, the circuit board may be located on both sides, the back side and the under side of the reproducing unit. Accordingly, the recording-medium reproducing unit may be adaptable to various layouts of the disc players of thin and thick types.

As in the recording-medium reproducing unit, which are constructed on the basis of the first recording-medium reproducing unit, bending members serve also as the holding members, and reproducing unit according to the invention, wherein the bending members each take a shape including at least one oblique side having a guide function for guiding each bending member.

Here, "guide function for bending" means a function to check a bending position and a bending direction of the lead wire. This function is realized by changing the direction in which the lead wire is extended, by the utilization of one oblique side of a trapezoidal hook, for example. In the invention, the holding function and the bending function of the hook may be realized by one hook. Accordingly, the invention provides a chassis for the recording-medium reproducing unit which is able to adapt to various layouts of the circuit board, without increasing the number of parts.

As in the recording-medium reproducing unit based on the invention, each holding member includes a plurality of shapes inclusive of at least an L-shaped part.

As in the recording-medium reproducing unit based on the invention, the L-shaped holding member serves as an fastening part used for leading out one of the lead wires in the first direction and an fastening part used for leading out the other of the lead wires in the second direction.

In the invention, when the flexible cables are derived in two directions perpendicular to each other, the L-shaped holding members are provided on the chassis of the reproducing unit. In the structure, the two sides of the character L serve as walls. One of the two flexible cables may be directed in one of the two directions, and in this state, it is held down.

As in the recording medium reproducing unit based on the invention, the L-shaped holding part is formed at a position at which the L-shaped holding part holds also the lead wire as bent, by the bending member, from the first direction to the second direction and led out in the second direction.

In the invention, when the direction of one of the flexible cables is changed to the other direction, and the hooks serve as holding members for the two flexible cables, the holding members are formed at appropriate positions for the bending members, whereby the holding members are capable of be adaptable to the two directions.

As in a recording-medium reproducing unit based on the invention, the recording-medium reproducing unit includes an adapter which is fixed to the recording-medium reproducing unit and serves as legs of the recording-medium reproducing unit.

When the thickness of the recording-medium reproducing unit must be increased according to the layout of the disc player, it suffices to mount the adapter on under side of the reproducing unit.

According to another aspect of the invention, the holding member is formed at a position at which the holding member holds the lead wire; the lead wire is bent by the bending member from the first direction to the second direction; and the lead wire is led out in the second direction.

According to another aspect of the invention, the first and second directions are substantially perpendicular to each other.

According to another aspect of the invention, the lead wires are flexible cables.

According to another aspect of the invention, the recording medium reproducing device includes a turntable, an optical pickup, and a optical pickup moving device.

According to another aspect of the invention, the lead wires are led out of at least one of a turntable, an optical pickup, and a optical pickup moving device.

According to another aspect of the invention, further comprising a recording medium transporting mechanism.

According to another aspect of the invention, a recording medium reproducing unit element comprises a first fastening mechanism for fastening a lead wire to be led out in a first direction; and a second fastening mechanism for fastening the lead wire to be led out in a second direction different from the first direction.

According to another aspect of the invention, the first fastening mechanism is operable also as the second fastening mechanism.

According to another aspect of the invention, the first and second fastening mechanisms are hooks.

As in a recording-medium reproducing unit based on the invention, positioning pins for a disc player having the recording-medium reproducing unit are used for positioning the adapter to the recording-medium reproducing unit.

With this, there is no need of using the adapter and the positioning mechanism additionally. The working process is simplified. Further, since the positioning pins are used in common, the mounting accuracy among the reproducing unit, the adapter and the disc player is improved.

As in the recording-medium reproducing unit based on the invention, the adapter holds the circuit board.

Here, "hold" means to fix the circuit board to within the adapter. The circuit board is fixed while being spaced from and parallel to the bottom of the reproducing-unit body by the circuit-board supporting holes, which are formed in the inner sides of the rear legs of the right and left adapters on the under side of the reproducing unit, positioning pins, which stand erect, while being directed downward, on the right and left adapters, and thread holes. Accordingly, the circuit board may easily be disposed at a predetermined position on the under side of the reproducing unit. Further, there is no case that the protruded circuit parts mounted on the circuit board come in contact with the reproducing unit.

**In the Drawings;**

Fig. 1A is a plan view showing a wiring of flexible cables when a circuit board is located on the side of a disc reproducing-unit body.

Fig. 1B is a front view showing the circuit board/reproducing-unit body combination shown in Fig. 1A when seen from the front side in the tray transporting direction.

Fig. 2 is a plan view showing a wiring of flexible cables when a circuit board is located on the back side of the disc reproducing-unit body.

Fig. 3A is a plan view showing a wiring of flexible cables when a circuit board is fixed to an adapter disposed on the under side of the disc reproducing-unit body.

Fig. 3B is a front view showing the circuit board/reproducing-unit body combination shown in Fig. 3A when seen from the front side in the tray transporting direction.

Fig. 4 is a bottom view showing a recording-medium reproducing unit with flexible cables being extended to the back side of the unit.

Fig. 5 is a bottom view showing the disc reproducing unit with the flexible cables being laterally extended.

Fig. 6 is a plan view showing flexible cable fastening hooks arranged on the bottom surface of the float base.

Fig. 7A is a front view showing a right adapter.

Fig. 7B is a bottom view showing the same.

Fig. 7C is a plan view showing the same.

Fig. 8A is a front view showing a left adapter.

Fig. 8B is a bottom view showing the same.

Fig. 8C is a plan view showing the same.

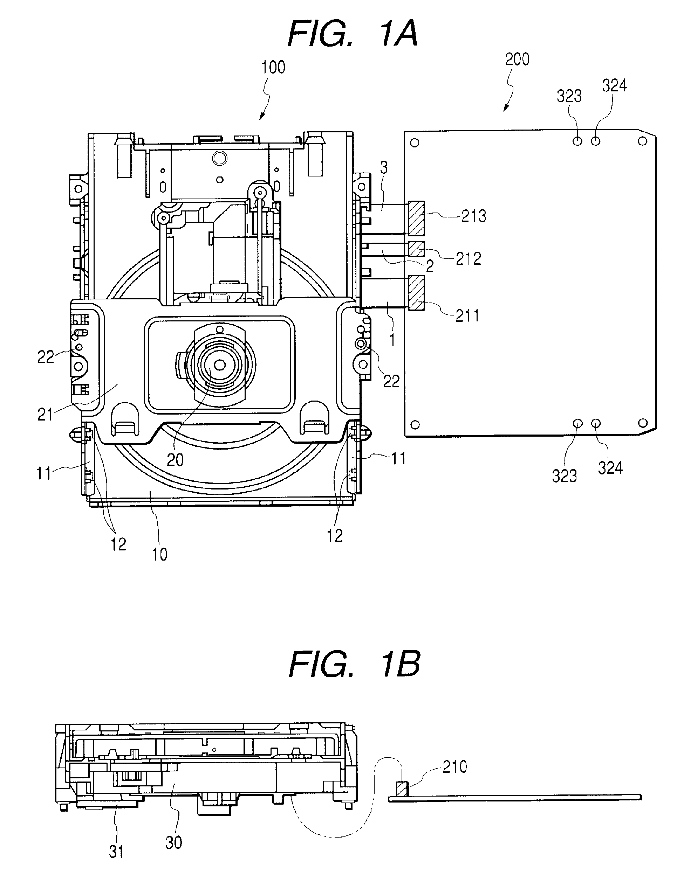

The preferred embodiments of the present invention will be described with reference to the accompanying drawings. Figs. 1 to 3 are plan views showing some layouts of a disc-reproducing unit body and a circuit board in a recording-medium reproducing unit which is an embodiment of the invention. The disc reproducing unit, as shown in Fig. 1, is disposed in a cabinet of a DVD player or the like (not shown), and is made up of a reproducing-unit body 100 and a circuit board 200. The reproducing-unit body 100 includes a loading mechanism which removably loads a tray 10 with a disc (not shown) mounted thereon into amain chassis 30. Specifically, flange parts 11 are formed on both side surfaces of the tray 10, and are fit into guide parts 12 formed near both side ends of the main chassis 30. With this mechanical arrangement, the tray 10 is linearly moved parallel to the disc surface and is transported between a tray storing position (see Figs. 1 to 3) and a tray discharging/replacing position.

On the reproducing-unit body 100, a clamper holder 21 having a clamper 20 at its central part is fastened to holder holding holes 22 of the main chassis 30 by means of screws. The clamper 20 clamps the disc between the clamper itself and a turntable to be given later, and an optical pickup to be described later reads and reproduces information from the clamped disc.

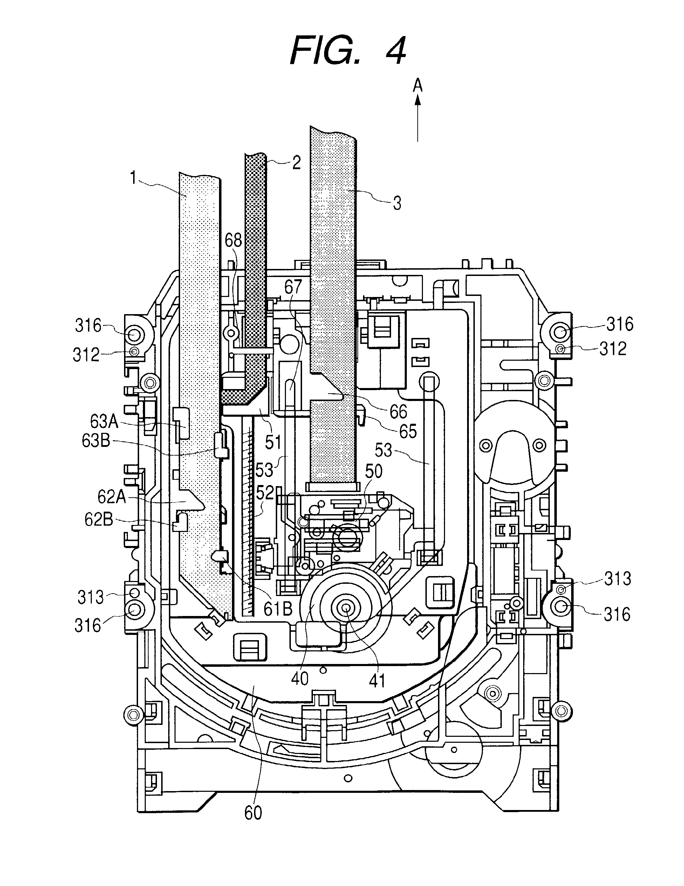

Fig. 4 is a bottom view showing the reproducing-unit body mounting a reproducing mechanism thereon. A spindle motor 40 for driving the turntable (not shown) for exercising the recording/reproducing function, the optical pickup 50, and a carriage motor 51 for driving the optical pickup 50, which are major components of the reproducing mechanism which are mounted as shown, are mounted on a float base 60 within the reproducing unit. A gear mechanism and a cam mechanism for lifting up and lifting down the float base for the purpose of clamping the disc when the disc is stored, are provided on the reproducing-unit body 100 and the float base 60.

The turntable is mounted on a motor shaft 41 of the spindle motor 40, which is mounted near one end of the float base 60 as viewed in the longitudinal direction. The optical pickup 50 receives a drive force for its reciprocal movement in the radial direction of the disc, from the carriage motor 51 via a transmission shaft 52. The optical pickup 50 is supported by sliding shafts 53, which are located on both ends of it as viewed in its widthwise direction and extend in the longitudinal direction of the float base 60, and is reciprocatively moved to and from the turntable in the longitudinal direction of the float base 60.

Power supplying lines for driving the spindle motor 40, the carriage motor 51, and the optical pickup 50, and signal lines for controlling the driving operation of them are contained in flexible cables (lead wires) 1, 2 and 3 are extended from the circuit board 200 (Fig. 1) connected a power source, and connected to the motors and the pickup.

The operation of the reproducing mechanism is abnormal when the flexible cables, which are connected between the circuit board 200 and the components, are too short, and also when those cables are too long. When the cables are too short, the smooth reciprocating motion of the optical pickup 50 will be hindered. Further, the flexible cable may be broken when it successively receives strong traction forces for a long term even if it is made of flexible material. When the cables are too long, the flexible cable will twine around the optical pickup 50 during its reciprocal motion, possibly stopping the motion of the pickup. Also when the cables come in contact with other movable parts, the operations of the disc reproducing mechanism and the disc transporting mechanism will be abnormal.

To avoid such disadvantages and to appropriately lay out the flexible cables, hooks 61A to 68 for fastening the flexible cables are integrally formed on the bottom surface of the float base 60. Those hooks fasten the flexible cables extending to the circuit board 200 as disposed.

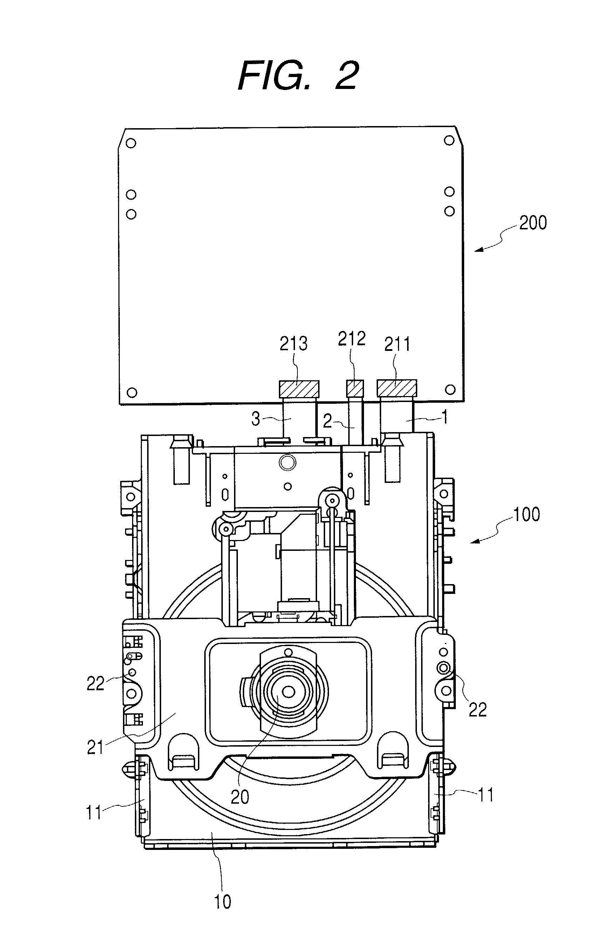

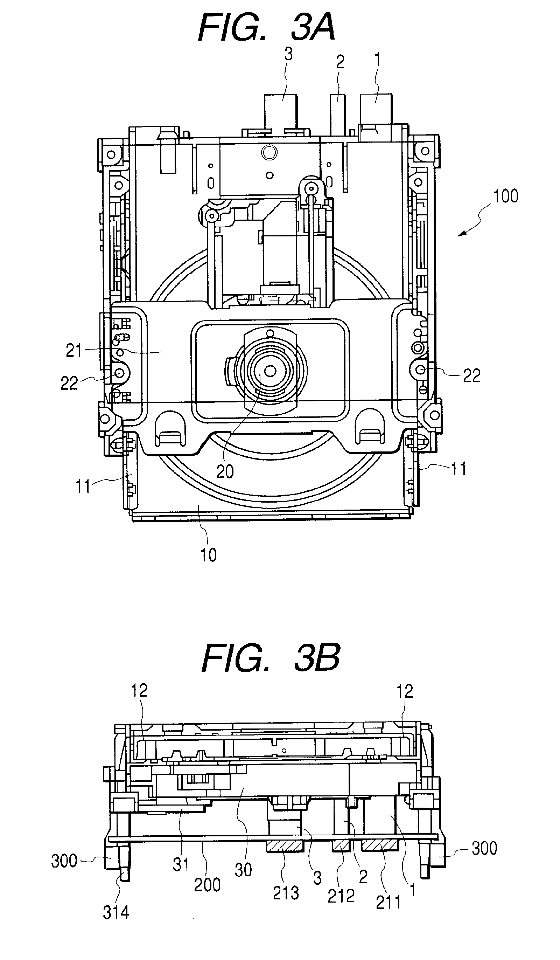

For the layout of the circuit board, when the disc player on which the reproducing unit is to be mounted is designed to have a sufficient space in the thickness direction, the circuit board is located on the bottom side of the reproducing unit, as shown in Fig. 3. Where the whole disc player is required to be thin, the circuit board is located on the side of the reproducing unit (Fig. 1) or on the back side as viewed in the moving direction of the tray 10 as shown in Fig. 2. This is due to the fact that there is a case that a number of the protruded circuit parts are present on the obverse and reverse sides of the circuit board, although the circuit board per se is thin, and in such a case, not a small space is needed for accepting the installation of the circuit board. Even in a case where the thinning of the disc player is required, if a sufficient space for the circuit board installation is present, for example, in the width direction, the circuit board is located on the side of the reproducing unit. When the product is designed to be narrow and long in the vertical direction, the circuit board is usually disposed on the back side of the reproducing unit.

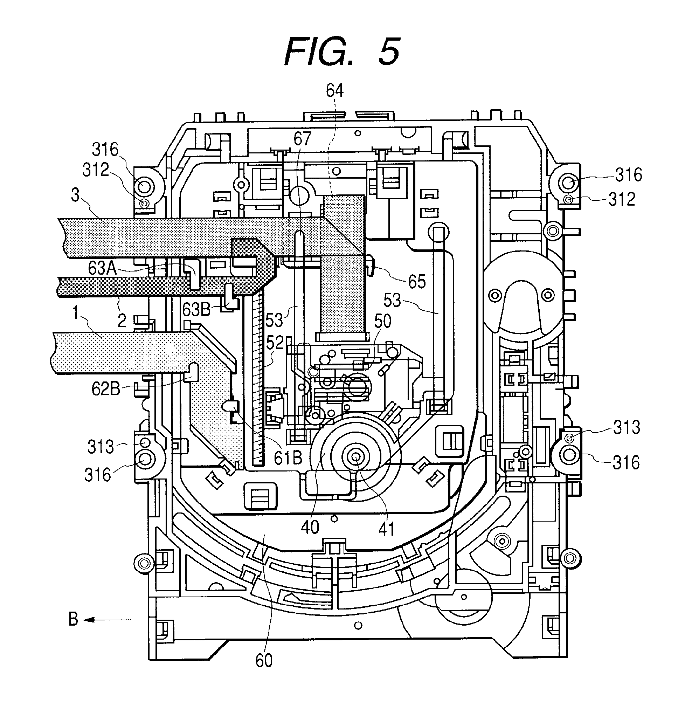

In connection with this, the main chassis 30 of the reproducing-unit body 100, particularly the float base 60 having cable-fastening hooks provided on the bottom, is designed to be used in common for the different types of disc players. To this end, the following requirements must be satisfied. Each of the hooks is shaped to be adaptively used in a direction A (toward the back side of the reproducing unit) (Fig. 4) and also in a direction B (toward the side of the reproducing unit) (Fig. 5), and those must be disposed at appropriate positions.

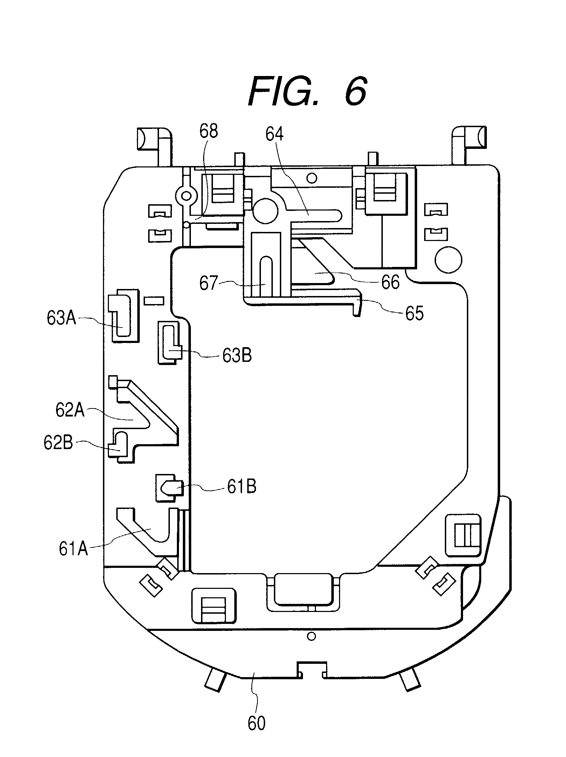

Fig. 6 exemplarily shows hooks 61A to 68 arranged on the bottom surface of the float base 60. Fig. 4 is a bottom view showing the disc reproducing unit with flexible cables being extended in the direction A. Description will be given referring mainly to Figs. 4 and 6. The shapes of the hooks to be given hereunder will be described as seen from the bottom side of the float base 60 in the perpendicular direction.

The hook 61A is a direction-turning hook which is used only for turning the spindle-motor flexible cable 1 extended from the spindle motor 40 for driving the turn table in the direction A. This hook is shaped like a trapezoid which is formed by cutting the bottom surface of the float base 60 in a state that one of the bottom angles is a right angle. The cable extended from the under side is turned back, by use of its oblique side, to change its direction. The rectangular hook 61B is a one-direction holding member which holds down the cable 1 as turned back while being directed only in the directionA. This hook is erect while being, by a small clearance, spaced from the bottom surface of the float base 60 in order that the cable is held while being put within the hook. Other hooks having only the holding function, which will be described, likewise stand erect on the bottom surface of the float base. The hooks 62B, 62A, 63B, 63A serve as holding members for holding the flexible cable 1 directed in the direction A as directed by the rectangular hook 61B.

The rectangular hook 68 is a one-direction holding member which is used for extending the flexible cable 2 extended from the carriage motor 51 for the optical pickup 50 only in the direction A.

The rectangular hook 64 is a direction-turning member (indicated by a dashed line in Fig. 5). The flexible cable 3 derived from the back side of the optical pickup 50 is first directed in the direction A. To turn the flexible cable in the reverse direction, the rectangular hook 64 is used. The optical pickup 50 is a reciprocative moving device. To allow its hard movement, the cable is necessary to be sufficiently bent and long. Accordingly, a sufficient length of the cable ranging from the optical pickup 50 to the rectangular hook 64 is selected to be sufficiently long so as to be bent even when the optical pickup 50 moves to a position closest to the turntable. It is for this purpose for the member to turn the flexible cable in the reverse direction. The rectangular hook 65 is a direction-turning member which reversely turns again in the direction A the optical-pickup flexible cable 3 which comes from the optical pickup 50 after passing the rectangular hook 64, which define the direction-turning part of the cable, and under the hook 66. With use of the hook 65, a bending of the optical-pickup flexible cable 3 near the optical pickup is ensured.

The hooks 65 and 66 serve as holding members when the optical-pickup flexible cable 3 is extended in the direction A.

The functions of those hooks when the optical-pickup flexible cables 1 to 3 as shown in Fig. 5 are extended in the direction B will be described with reference to Fig. 6.

The spindle-motor flexible cable 1 is first extended from the hook 61A and the rectangular hook 61B to the direction A, and is bent upward by using the oblique side, vertically formed, of the trapezoidal hook 62A like the hook 61A. The hook 62A, like the hook 61A, is formed on the bottom surface of the float base 60. The spindle-motor flexible cable 1 as bent by the oblique side of the hook 62A is fastened by the hook 62B, and extended to the direction B. The trapezoidal hook 62A is used as a holding member for the direction A, and as a bending member for the direction B. The hook 62B is shaped like L when viewed from top. The cable is extended along the two linear legs of the character L, which have different length respectively, and functions to hold the cable as extended in both the directions A and B.

To give the hook 62B the function to adapt to both directions, the positional relation between the hooks 62A and 62B is more important. If the hook 62B is formed at the mid position of its range to the hook 61A, not the position shown in Fig. 6, it is unable to fasten the cable turned back by the trapezoidal hook 62A. Therefore, the hook 62B must be positioned near the trapezoidal hook 62A so that it can fasten the end of the spindle-motor flexible cable 1 as viewed in the width direction.

The carriage-motor flexible cable 2 contains a smaller number of for power and signal supply wires than that of other cables, and hence it is narrow in width. Accordingly, any special bending member is not required for changing the direction of the carriage-motor flexible cable 2 from the direction A to the direction B; it is turned to the direction B near the carriage motor; and it is inserted through spaces between the L-shaped hooks 63B and 63A and the mounting wall on the float base, whereby it is fastened. With this, the hooks 63A and 63B function as holding members for the directions A and B, just like the L-shaped hook 62B. Those hooks are formed at positions where the carriage-motor flexible cable 2 is turned near the carriage motor 51, whereby the hooks hold the cable. In this sense, the hook forming position is an important factors as of the hook 62B. It is noted that those hooks, unlike the hook 62B, are arranged such that, as mentioned above, the cable is inserted through spaces between the L-shaped hooks 63B and 63A and the mounting wall on the float base, whereby it is fastened. Accordingly, the characters "L"s of those hooks are confronted with each other.

When considering the functions of those hooks 63A and 63B, those hooks, unlike other hooks, alternatively operate as holding members for holding the flexible cable. This is a unique feature of those hooks.

How to extend the optical-pickup flexible cable 3 for the optical pickup 50 in the direction B will be described. The cable derived from the optical pickup 50, as already stated, is extended to the back side of the reproducing unit by way of the hooks 64 and 65. Further, the cable passes under the hook 66 and is extended upward, and then is bent to the direction B by the utilization of the oblique side of the hook 66, trapezoidal like the hooks 61A and 62A. The thus bent optical-pickup flexible cable 3 is held down by the rectangular hook 67, which is used exclusively for the cable bending in the direction B. The hook 66 is used as a holding member when the cable is bent in the direction A. It serves as a bending member when the cable is bent in the direction B.

As described in detail, the flexible cables may stably be extended in two directions by those various hooks formed on the bottom surface of the float base 60 in the reproducing-unit body 100. For this reason, one reproducing unit may be adaptively used for various layouts of the circuit board.

The number of flexible cables is 3, for ease of explanation. A flexible cable may be extended from the circuit board to other components, such as a tray loading motor. In this case, there is no need of passing the flexible cables on the float base. Accordingly, hooks may be provided on the outer wall of the chassis of the reproducing unit.

In the embodiment mentioned above, the hooks 61A, 62A and 66 are depicted as such a trapezoid that one of the bottom angles is a right angle and the other is about 45°, which presents a side ascending to the upper left. When the circuit board is obliquely disposed with respect to the reproducing unit, that bottom angle may be 60° or other angle. If required, the trapezoid is turned so that the oblique side is inclined to the right upper. While in the embodiment mentioned above the hook is trapezoid in shape, any other shape may be taken if it has at least one oblique side with a guide function in the bending work.

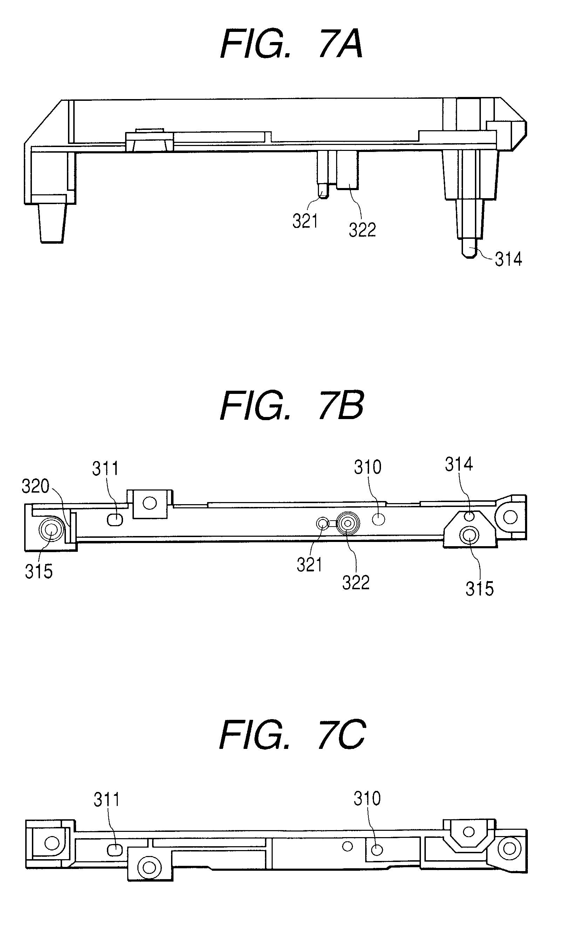

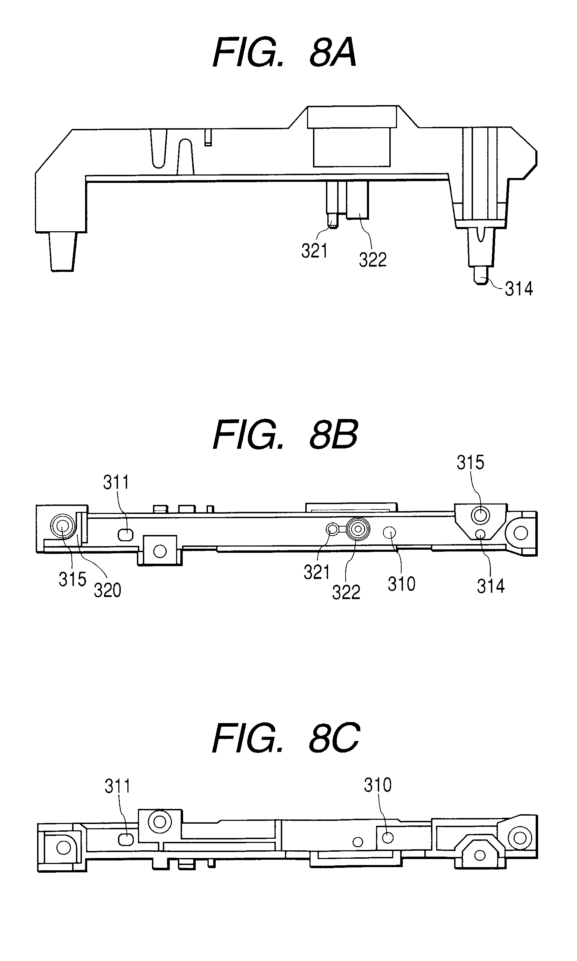

An adapter for adjusting the height of the disc reproducing unit in accordance with the height of the disc player, which is the second object of the invention, will be described in detail. Fig. 7A is a front view showing a right adapter; Fig. 7B is a bottom view showing the same; and Fig. 7C is a plan view showing the same . Fig. 8 shows those views of a left adapter.

In the disc players containing the disc reproducing units constructed as mentioned above, products having various layouts ranging from the thin type to the thick type are present. Specifically, the thin type of disc player is not always desired. The thick type of disc player is frequently desired depending on a location to install the disc player or a layout of related members. In this case, it suffices only to prepare the reproducing unit used only for the thick type. However, it should be avoided to prepare, for each layout of disc player, the reproducing unit having a thickness suitable for the layout, in light of cost performance. A possible way to change the reproducing unit of the thin type as shown in Fig. 1B to the reproducing unit of the thick type as shown in Fig. 3B is to install an adapter under the reproducing unit.

To install the adapter, which will increase the device height, on the under side of the disc reproducing unit for adaptation to the thick disc player, an assembling step to mount the adapter on the chassis of the disc player is additionally provided, however. Accordingly, a problem arises anew that the accuracy of its mounting position must be high to exactly position the reproducing unit within the disc player. If the problem arises, the tray is displaced relative to the opening of the front panel, so that the tray loading mechanism will be abnormal.

For this reason, this mounting position accuracy is a vital factor.

The invention succeeds in solving this problem by using positioning guide pins in common for both the reproducing-unit body 100, the adapter 300 and the chassis (not shown) of the discplayer. Specifically, turning-motion regulating pins 312 and 313 of the reproducing unit shown in Fig. 4 are used for positioning the reproducing unit to the chassis (no adapter is required) of the thin type. In the embodiment, those pins are used as positioning/guiding pins for between the reproducing-unit body 100 and the adapter 300 when the adapter is assembled. More specifically, the positioning pin 313 of the reproducing unit is passed through an positioning circular hole 310 shown in Figs. 7 and 8. Then, the turning-motion regulating pin 312 of the reproducing unit is passed through an elongated hole 311 of the adapter shown in Figs. 7 and 8. The elongated hole 311 roughly positions the turning-motion regulating pin 312 and checks the turn of the adapter. The positioning circular holes 310 are used only for positioning the adapter. Right and left pins 313 of the reproducing unit are engaged into right left positioning circular holes 310, so that those pins are positioned highly accurately. The above is a first feature of the adapter of the invention.

Description will be given about the reason why the mounting position is increased when the positioning pins are used in common. As a generalization, when three different articles A, B and C are positioned by using guide pins and their engaging holes, it is impossible to completely avoid a minute positional error of the positioning even between the articles A and B. The same thing is true for the positioning between the articles B and C. Therefore, there is the possibility that when three articles are mounted, a positional error that may occur is two times as large as in the case of the positioning of two articles. Specifically, the positioning error problem may be solved by increasing the dimensional accuracy of the two pins and two holes. However, it is impossible to manufacture two parts of which the dimensions are exactly equal to each other. For this reason, it is desirable that the positioning parts are designed to be used in common as in the present invention. In other words, in the invention of the present patent application, when described using the generalized case, the guide pins and engaging holes are formed based on the dimension accuracy of the positioning between the articles A and C. The guide pin for the positioning of the article A is also used for the positioning between the articles A and B. If not so done, the article A must be manufactured after the dimensional accuracy of the positioning pins for the positioning between the articles A and B is secured anew. As a result, the inevitable, dimensional error mentioned above is additionally superimposed on the already one.

The adapter 300 is positioned to the chassis of the disc player by engaging a positioning pin 314 (Figs. 7 and 8) into an engaging hole of the chassis of the player body. Further, those are fastened by inserting screws into four screw holes 315 illustrated, from the chassis side of the player.

In a modification, the four threaded holes 315 of the adapter 300 are coincident in position with four threaded holes 316 (see Fig. 4) of the reproducing-unit body 100, and the mounting holes (not shown) of the chassis of the player are used in common for them. The modification thus constructed also improves the dimensional accuracy of the mounting parts, as described above.

A structure capable of holding the circuit board, which is a second feature of the adapter of the invention, will be described hereunder. In Figs. 7B and 8B, both ends of one of the long sides of a circuit board 200 are inserted into circuit-board supporting holes 320, which are formed in the inner sides of the rear legs of the right and left adapters. Then, positioning pins 321, which stand erect, while being directed downward, on the right and left adapters, are inserted into positioning circular holes 323 (see Fig. 1) of the circuit board. Finally, screw holes 324 (see Fig. 1) of the circuit board 200 are placed while being aligned with threaded holes 322 of both the adapters, which are provided likewise standing erect, and those are fastened together by means of screws. In this case, the circuit board 200 is fixed while being spaced from and parallel to the bottom of the reproducing-unit body 100.

Accordingly, the circuit board may easily be disposed at a predetermined position on the under side of the reproducing unit. Further, the circuit board is held spaced from the reproducing unit. With this feature, there is no case that the protruded circuit parts mounted on the circuit board come in contact with the reproducing unit. Accordingly, there is no need of using parts used only for preventing the circuit board from coming in contact with the reproducing unit.

Connectors 210 as mounting parts of the flexible cables on the circuit board are uniquely shaped. When the circuit board is disposed on the under side of the reproducing unit, connectors 211 to 213 are placed horizontally, as shown in Fig. 3B, since an insufficient space is present around the circuit board. When the connectors are horizontally placed, it is difficult to insert the flexible cable into the connectors for the flexible cables connection. When the circuit board is placed on the side of the circuit board as shown in Figs. 1A and 2, it is preferable that the connectors 210 are vertically placed as shown in Fig. 1B since no space problem is present. If so done, the cables may be inserted into the connectors, from top. Accordingly, the working efficiency is improved.

## Claims

1. A recording medium reproducing unit comprising:
a recording-medium reproducing device (100);
a lead wire (1-3) connected to a circuit board (200), the lead wire for supplying electric power and/or transmitting a signal to the circuit board (200), the lead wire led out in either of a first direction or a second direction different from the first direction;
a holding member (61A-68) for holding down the lead wire (1-3); and
a bending member (61A,62A, 64, 65,66) for bending the lead wire (1-3).

2. The recording medium reproducing unit according to claim 1 or 2, wherein the bending member (61A, 62A, 66) serves as the holding member (61A, 62A, 66).

3. The recording medium reproducing unit according to claim 1 or 2, wherein the bending member (61A, 62A, 66) takes a shape including at least one oblique side having a guide function for bending the lead wire (1-3).

4. The recording medium reproducing unit according to claim 1, wherein the lead wire includes a plurality of the lead wires (1-3)

5. The recording medium reproducing unit according to claim 1, wherein the holding member (62B, 63A, 63B) includes a L-shaped part.

6. The recording medium reproducing unit according to claim 5, wherein the lead wire includes a plurality of lead wires (1-3); and
the holding member (63A, 63B) fastens at least one of the lead wires led out in the first direction and another of the lead wires led out in the second direction.

7. The recording medium reproducing unit according to claim 5, wherein the holding member (62B) is formed at a position at which the holding member (62B) holds the lead wire (1);
the lead wire (1) is bent by the bending member (62A) from the first direction to the second direction;
and the lead wire (1) is led out in the second direction.

8. The recording medium reproducing unit according to any of claims 1 to 7, wherein the first and second directions are inclined relative to each other.

9. The recording medium reproducing unit according to claim 1, wherein the lead wire (1-3) is a flexible cable.

10. The recording medium reproducing unit according to claim 1, wherein the recording medium reproducing device (100) includes a turntable, an optical pickup (50), and a optical pickup moving device (51).

11. The recording medium reproducing unit according to claim 4, wherein the lead wires (1-3) are led out of at least one of a turntable, an optical pickup (50), and a optical pickup moving device (51).

12. The recording medium reproducing unit according to claim 1, further comprising a recording medium transporting mechanism.

13. A recording medium reproducing unit element comprising:
a first fastening mechanism (61A, 61B, 62A, 62B, 63A, 63B, 64, 65, 66, 68) for fastening a lead wire (1-3) to be led out in a first direction; and
a second fastening mechanism (61A, 62A, 62B, 63A, 63B, 64, 65, 66, 67) for fastening the lead wire (1-3) to be led out in a second direction different from the first direction.

14. The recording medium reproducing unit element according to claim 13 wherein the first fastening mechanism (61A, 62A, 62B, 63A, 63B, 64, 65,66) is operable also as the second fastening mechanism (61A, 62A, 62B, 63A, 63B, 64, 65,66).

15. The recording medium reproducing unit element according to claim 13 or 14, wherein the first and second fastening mechanisms (61A-68A) are hooks.

16. A recording medium reproducing unit comprising:
a recording medium reproducing device; and
an adapter (300) which is fixed to the recording medium reproducing device (100) and serves as legs of the recording medium reproducing device (100).

17. The recording medium reproducing unit according to claim 16, wherein a positioning pin (312, 313) for a disc player having the recording medium reproducing device (100) are used for positioning the adapter (300) to the recording medium reproducing device (100)

18. The recording medium reproducing unit according to claim 16, wherein the adapter (300) holds a circuit board (200).

19. The recording medium reproducing unit according to claim 16, wherein a mounting hole (316) of the recording medium reproducing device (100) for a disc player are coincident in position with a mounting hole (315) of the adapter (300) for the disc player, wherein the mounting hole (316) of the disc player is used in common.
